# FASCICULE DE BREVET EUROPEEN

(11) **EP 2 536 616 B1**
(45) Date de publication et mention de la délivrance du brevet: **25.06.2014**
(21) Numéro de dépôt: 11706866.8
(22) Date de dépôt: 24.01.2011
(51) Int. Cl.: B62D 65/02, B62D 65/18, E04H 5/06

(54) **LIGNE D'ASSEMBLAGE DE CAISSES DE VEHICULES AUTOMOBILES OU D'APPLICATIONS SOUS CAISSES DE VÉHICULES AUTOMOBILES ÉQUIPÉE D'UNE FOSSE ACCESSIBLE PAR UN OPÉRATEUR ET PROCÉDÉ METTANT EN OEUVRE UNE TELLE LIGNE**
MONTAGELINIE FÜR KRAFTFAHRZEUGKAROSSERIEN ODER ZUR VERWENDUNG UNTER KRAFTFAHRZEUGKAROSSERIEN MIT EINER BEDIENERBEGEHBAREN GRUBE SOWIE VERFAHREN ZUR IMPLEMENTIERUNG SOLCH EINER LINIE
ASSEMBLY LINE FOR MOTOR VEHICLE BODIES OR FOR USES UNDER MOTOR VEHICLE BODIES, WHICH IS PROVIDED WITH AN OPERATOR-ACCESSIBLE PIT, AND METHOD IMPLEMENTING SUCH A LINE

(30) Priorité: 18.02.2010 FR 1051179
(43) Date de publication de la demande: 26.12.2012
(73) Titulaire: Peugeot Citroën Automobiles SA, 78140 Vélizy Villacoublay (FR)
(72) Inventeur: HERMETZ, Fabrice, F-75018 Paris (FR)
(74) Mandataire: Fosse, Danièle
(86) Numéro de dépôt international: PCT/FR2011/050132
(87) Numéro de publication internationale: WO 2011/101567

(56) Documents cités:
- DE-U1- 29 719 407
- FR-A1- 2 927 831
- FR-A1- 2 930 514

## Description

La présente invention se rapporte à une ligne d'assemblage de caisses de véhicules automobiles ou d'applications sous caisses de véhicules automobiles et à un procédé mettant en oeuvre une telle ligne.

De façon traditionnelle, lors d'applications sous caisses de véhicules ou lors de l'assemblage d'un véhicule sur une ligne de montage, diverses opérations doivent être effectuées sur l'ensemble de la caisse, c'est-à-dire sur ses parties supérieures et inférieures.

Pour réaliser des opérations sur le dessous d'une caisse, c'est-à-dire sur les parties inférieures d'une caisse, il est généralement nécessaire d'élever la caisse au sein de la ligne de montage : la caisse est alors généralement suspendue à un rail de suspension, et subie une étape d'élévation, en suivant le rail de suspension, durant laquelle aucune opération ne peut être effectuée sur la caisse. Une telle étape d'élévation est préjudiciable à la cadence de production de la ligne de montage, ou de la ligne de peinture ou la ligne de ferrage.

Par ailleurs, afin de supporter la masse d'une caisse suspendue, le rail de suspension doit être dimensionné de façon conséquente, tout comme doivent l'être les installations environnantes auxquelles est fixé un tel rail. C'est pourquoi, une ligne de montage, de peinture ou de ferrage alterne généralement des étapes d'assemblage durant lesquelles la caisse est suspendue et des étapes durant lesquelles la caisse ne l'est pas. Les étapes consistant à suspendre la caisse à un rail ou à la décrocher sont également préjudiciables à la cadence de production d'une ligne de montage.

Pour ces raisons, et afin de réduire les dimensions et l'encombrement d'une ligne de montage, il est souhaitable de diminuer, voire de supprimer, de telles étapes durant lesquelles la caisse est suspendue à un rail de suspension.

Dans DE 297 19 407 est proposé un agencement de poste de montage pour véhicule ferroviaire comprenant des moyens de guidage conçus pour guider le déplacement du véhicule le long du poste de montage, ledit poste comportant une fosse délimitée par deux bâtis latéraux et dimensionnée pour accueillir au moins un premier opérateur afin d'effectuer au moins une première opération sur le dessous du véhicule guidé le long du poste, les moyens de guidage étant fixés à au moins un des bâtis latéraux.

La présente invention a pour objet de remédier en tout ou partie aux différents inconvénients cités précédemment.

A cet effet, la présente invention se rapporte à une ligne d'assemblage de caisses de véhicules automobiles ou d'applications sous caisses de véhicules automobiles, la ligne comprenant des moyens de guidage conçus pour guider le déplacement au sein de la ligne d'une caisse de véhicule, la ligne comportant une fosse délimitée par deux bâtis latéraux et dimensionnée pour accueillir au moins un premier opérateur ou au moins un premier robot afin d'effectuer au moins une première opération sur le dessous de la caisse guidée au sein de la ligne, les moyens de guidage étant fixés à au moins un des bâtis latéraux caractérisée en ce qu'elle comporte en outre un dispositif de support conçu pour supporter la caisse de véhicule et dégager un accès à au moins une zone centrale du dessous de la caisse, le dispositif de support coopérant au sein de la ligne avec les moyens de guidage pour déplacer la caisse.

Ainsi, une ligne selon l'invention permet d'éviter des étapes d'élévation pour effectuer au moins une première opération sur le dessous de ladite caisse. En effet la fosse permet un accès par un premier opérateur ou un robot au dessous de la caisse, sans élever celle-ci. En outre, la fixation des moyens de guidage à au moins un des bâtis latéraux délimitant la fosse permet de simplifier la structure environnante de la ligne, en évitant de recourir à un rail de suspension. De plus, les moyens de guidage étant fixés sur les côtés de la fosse, ils permettent de dégager au moins une zone centrale du dessous de la caisse pour ladite première opération.

Enfin, une ligne selon l'invention peut facilement intégrer des étapes classiques d'assemblage d'une caisse de véhicule qui ne nécessitent pas d'accéder au dessous de ladite caisse. En effet, les moyens de guidage peuvent se prolonger vers d'autres parties de la ligne où des opérations sont effectuées sur des parties supérieures ou latérales de la caisse.

Un tel dispositif de support permet de guider et déplacer la caisse tout au long d'une ligne selon l'invention sans avoir recours à des étapes de changement de support ou de mise en suspension de la caisse.

Selon une possibilité, les moyens de guidage s'étendent au moins en partie le long de la fosse.

Selon une caractéristique de l'invention, les moyens de guidage comprennent au moins un rail fixé le long d'un des bâtis latéraux de la fosse. Ainsi, les moyens de guidage sont simples à réaliser.

Avantageusement alors, les moyens de guidage comportent deux rails, chacun étant fixé le long de chacun des bâtis latéraux.

Dans un mode de réalisation de l'invention, la ligne comprend en outre au moins une plateforme disposée le long de la fosse et destinée à accueillir au moins un deuxième opérateur ou au moins un deuxième un robot afin d'effectuer au moins une deuxième opération sur des parties latérales ou supérieures de la caisse. Ainsi, une ligne selon l'invention permet d'augmenter la cadence de la ligne en effectuant une première et une deuxième opérations simultanément sur différentes parties de la caisse.

Selon une caractéristique de l'invention, le déplacement du dispositif de support est motorisé.

Dans un mode de réalisation de l'invention, la ligne comporte en outre des carters de protection conçus pour protéger les moyens de guidage. Ainsi, les carters permettent de protéger les moyens de guidage d'éventuelles projections de produits appliqués sur la caisse durant une des opérations.

Selon une possibilité de l'invention, la première opération et/ou la deuxième opération consistent en un traitement de surface.

La présente invention concerne également un procédé d'application d'un traitement de surface sur une caisse de véhicule automobile comprenant les étapes suivantes, consistant à :
a) positionner une caisse de véhicule sur un dispositif de support selon l'invention ;
b) positionner le dispositif de support sur une ligne conforme à l'invention de manière à ce qu'il coopère avec les moyens de guidage ;
c) effectuer au moins une première opération de traitement de surface sur le dessous de la caisse par le biais d'un premier opérateur ou d'un premier robot positionné dans la fosse ;
d) déplacer le dispositif de support au sein de la ligne.

L'invention sera bien comprise à l'aide de la description détaillée qui est exposée ci-dessous en regard du dessin annexé, représentant à titre d'exemple non limitatif une forme de réalisation d'une ligne de traitement de surface, dans laquelle :
La figure 1 est une vue en perspective partielle d'une ligne selon la présente invention ;
la figure 2 est une vue en coupe transversale d'une ligne selon la figure 1.

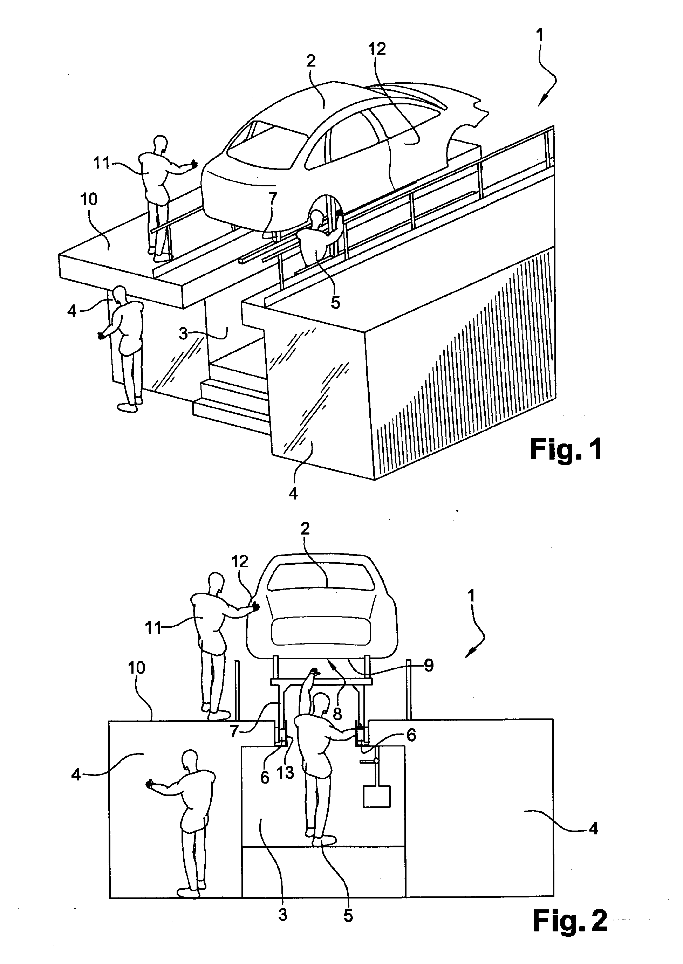

Une ligne 1 d'assemblage d'une caisse 2 de véhicule automobile, représentée sur les figures 1 et 2, comporte une fosse 3 délimitée par deux bâtis latéraux 4. La fosse 3 est dimensionnée pour accueillir au moins un premier opérateur 5, représenté sur les figures 1 et 2, qui peut en particulier se tenir debout. La ligne 1 comporte également des moyens de guidage réalisés, par exemple, sous la forme de deux rails 6 de guidage. Ces rails 6 de guidage sont conçus pour guider le déplacement au sein de la ligne 1 de la caisse 2 de véhicule. Les rails 6 de guidage sont disposés et fixés chacun sur un des bâtis latéraux 4 et s'étendent chacun le long d'au moins une partie de la fosse 3.

La ligne 1 présente également un dispositif de support 7, représenté sur les figures 1 et 2, conçu pour supporter la caisse 2. Le dispositif de support 7 présente une structure conçue pour dégager un accès à au moins une zone centrale 8 du dessous 9 de la caisse 2 lorsque celle-ci est supportée par ledit dispositif de support 7. Le dispositif de support 7 coopère avec les rails 3 de guidage, au sein de la ligne 1, pour assurer le déplacement de la caisse 2 le long d'au moins une partie de la fosse 3. Le déplacement du dispositif de support 7 est par exemple motorisé. Les rails 6 de guidage sont protégés par des carters 13 de protection, représentés sur la figure 2.

Lorsqu'une caisse 2, supportée par le dispositif de support 7, est positionnée au dessus de la fosse 3, un premier opérateur 5 positionné dans la fosse 3 est alors en mesure d'effectuer au moins une première opération sur le dessous 9 de la caisse 2. Une telle opération consiste, par exemple, en un traitement de surface.

La ligne 1 telle que représentée sur les figures comporte en outre au moins une plateforme 10 disposée le long de la fosse 3. Cette plateforme 10 est agencée pour accueillir au moins un deuxième opérateur 11, représenté sur les figures, afin que celui-ci soit en mesure d'effectuer au moins une deuxième opération sur des parties 12 latérales ou supérieures de la caisse 2.

Ainsi, la ligne 1 selon l'invention décrit ci-dessus permet d'éviter des étapes durant lesquelles la caisse 2 se déplaçant le long de la ligne 1 doit être élevée. La ligne 1 permet également d'utiliser un même dispositif de support 7 le long de toute la ligne 1 sans recourir à un changement de support. La ligne 1 permet donc d'augmenter la cadence de production par rapport à une ligne de montage classique.

Bien entendu, les exemples de réalisations évoqués ci-dessus ne présentent aucun caractère limitatif et d'autres détails et améliorations peuvent être apportés à la ligne 1 selon l'invention, sans pour autant sortir du cadre de l'invention où d'autres formes de la ligne 1 peuvent être réalisées.

## Revendications

1. Ligne (1) d'assemblage de caisses de véhicules ou d'applications sous caisses de véhicules, la ligne (1) comprenant des moyens de guidage conçus pour guider le déplacement au sein de la ligne (1) d'une caisse (2) de véhicule, et une fosse (3) délimitée par deux bâtis latéraux (4) et dimensionnée pour accueillir au moins un premier opérateur (5) ou au moins un premier robot afin d'effectuer au moins une première opération sur le dessous (9) de la caisse (2) guidée au sein de la ligne (1), les moyens de guidage étant fixés à au moins un des bâtis latéraux (4), **caractérisée en ce que** la ligne est une ligne d'assemblage de véhicules automobiles et **en ce qu'**elle comporte en outre un dispositif de support (7) conçu pour supporter la caisse (2) de véhicule et dégager un accès à au moins une zone centrale (8) du dessous (9) de la caisse (2), le dispositif de support (7) coopérant au sein de la ligne (1) avec les moyens de guidage pour déplacer la caisse (2).

2. Ligne (1) selon la revendication 1, dans laquelle les moyens de guidage s'étendent au moins en partie le long de la fosse (3).

3. Ligne (1) selon l'une des revendications 1 ou 2, dans laquelle les moyens de guidage comprennent au moins un rail (6) fixé le long d'un des bâtis latéraux (4) de la fosse (3).

4. Ligne (1) selon la revendication précédente, dans laquelle les moyens de guidage comportent deux rails (6), chacun étant fixé le long de chacun des bâtis latéraux (4).

5. Ligne (1) selon l'une des revendications 1 à 4, comprenant en outre au moins une plateforme (10) disposée le long de la fosse (3) et destinée à accueillir au moins un deuxième opérateur (11) ou au moins un deuxième un robot afin d'effectuer au moins une deuxième opération sur des parties (12) latérales ou supérieures de la caisse (2).

6. Ligne (1) selon l'une des revendications 1 à 5, dans laquelle le déplacement du dispositif de support (7) est motorisé.

7. Ligne (1) selon l'une des revendications 1 à 6, comportant en outre des carters (13) de protection conçus pour protéger les moyens de guidage.

8. Ligne (1) selon l'une des revendications 1 à 6, dans laquelle la première opération et/ou la deuxième opération consistent en un traitement de surface.

9. Procédé d'application d'un traitement de surface sur une caisse (2) de véhicule automobile comprenant les étapes suivantes, consistant à :
a) positionner une caisse (2) de véhicule sur un dispositif de support (7) d'une ligne (1) selon l'une des revendications 1 à 7 ;
b) positionner le dispositif de support (7) sur une ligne (1) conforme à l'une des revendications 1 à 7 de manière à ce qu'il coopère avec les moyens de guidage ;
c) effectuer au moins une première opération de traitement de surface sur le dessous (8) de la caisse (2) par le biais d'un premier opérateur (5) ou d'un premier robot positionné dans la fosse (3) ;
d) déplacer le dispositif de support (7) au sein de la ligne (1).

## Patentansprüche

1. Montagelinie (1) für Fahrzeugkarosserien oder Anwendungen unterhalb von Fahrzeugkarosserien, wobei die Linie (1) Führungsmittel aufweist, die konzipiert sind, um die Bewegung innerhalb der Linie (1) einer Fahrzeugkarosserie (2) zu führen, und eine Grube (3), die von zwei seitlichen Aufbauten (4) begrenzt ist, und die bemessen ist, um mindestens einen ersten Bediener (5) oder mindestens einen ersten Roboter aufzunehmen, um mindestens einen ersten Vorgang auf der Unterseite (9) der innerhalb der Linie (1) geführten Karosserie (2) auszuführen, wobei die Führungsmittel an mindestens einem der seitlichen Aufbauten (4) befestigt sind, **dadurch gekennzeichnet, dass** die Linie eine Montagelinie für Kraftfahrzeuge ist und dass sie ferner eine Tragvorrichtung (7) aufweist, die konzipiert ist, um die Fahrzeugkarosserie (2) zu tragen und einen Zugang zu mindestens einer zentralen Zone (8) der Unterseite (9) der Karosserie (2) freizulegen, wobei die Tragvorrichtung (7) innerhalb der Linie (1) mit den Führungsmitteln zusammenwirkt, um die Karosserie (2) zu bewegen.

2. Linie (1) nach Anspruch 1, bei der sich die Führungsmittel mindestens teilweise entlang der Grube (3) erstrecken.

3. Linie (1) nach einem der Ansprüche 1 oder 2, bei der die Führungsmittel mindestens eine Schiene (6) aufweisen, die entlang einem der seitlichen Aufbauten (4) der Grube (3) befestigt ist.

4. Linie (1) nach dem vorhergehenden Anspruch, bei der die Führungsmittel zwei Schienen (6) aufweisen, die jeweils entlang jedem der seitlichen Aufbauten (4) befestigt sind.

5. Linie (1) nach einem der Ansprüche 1 bis 4, die ferner mindestens eine Plattform (10) aufweist, die entlang der Grube (3) angeordnet und dazu bestimmt ist, mindestens einen zweiten Bediener (11) oder mindestens einen zweiten Roboter aufzunehmen, um mindestens einen zweiten Vorgang auf seitlichen oder oberen Teilen (12) der Karosserie (2) auszuführen.

6. Linie (1) nach einem der Ansprüche 1 bis 5, bei der die Bewegung der Tragvorrichtung (7) motorisiert ist.

7. Linie (1) nach einem der Ansprüche 1 bis 6, die ferner Schutzverkleidungen (13) aufweist, die konzipiert sind, um die Führungsmittel zu schützen.

8. Linie (1) nach einem der Ansprüche 1 bis 6, bei der der erste Vorgang und/oder der zweite Vorgang aus eine Oberflächenbehandlung bestehen.

9. Verfahren zum Auftragen einer Oberflächenbehandlung auf einer Kraftfahrzeugkarosserie (2), das die folgenden Schritte aufweist:
a) Positionieren einer Fahrzeugkarosserie (2) auf einer Tragvorrichtung (7) einer Linie (1) nach einem der Ansprüche 1 bis 7;
b) Positionieren der Tragvorrichtung (7) auf einer Linie (1) nach einem der Ansprüche 1 bis 7 derart, dass sie mit den Führungsmitteln zusammenwirkt;
c) Ausführen mindestens eines ersten Oberflächenbehandlungsvorgangs auf der Unterseite (8) der Karosserie (2) durch einen ersten Bediener (5) oder einen ersten Roboter, der in der Grube positioniert ist (3);
d) Bewegen der Tragvorrichtung (7) innerhalb der Linie (1).

## Claims

1. An assembly line (1) for vehicle bodies or for uses under vehicle bodies, the line (1) including guide means designed to guide the movement of a vehicle body (2) within the line (1), and a pit (3) delimited by two side frames (4) and dimensioned to accommodate at least a first operator (5) or at least a first robot so as to carry out at least a first operation on the underside (9) of the body (2) guided within the line (1), the guide means being attached to at least one of the side frames (4), **characterized in that** the line is an assembly line for motor vehicles and **in that** it further comprises a support device (7) designed to support the vehicle body (2) and to clear an access to at least a central zone (8) of the underside (9) of the body (2), the support device (7) cooperating within the line (1) with the guide means for moving the body (2).

2. The line (1) according to Claim 1, in which the guide means extend at least in part along the pit (3).

3. The line (1) according to one of Claims 1 or 2, in which the guide means include at least one rail (6) fixed along one of the side frames (4) of the pit (3).

4. The line (1) according to the preceding claim, in which the guide means comprise two rails (6), each being fixed along each of the side frames (4).

5. The line (1) according to one of Claims 1 to 4, further including at least one platform (10) disposed along the pit (3) and intended to accommodate at least a second operator (11) or at least a second robot so as to carry out at least a second operation on lateral or upper parts (12) of the body (2).

6. The line (1) according to one of Claims 1 to 5, in which the displacement of the support device (7) is motorised.

7. The line (1) according to one of Claims 1 to 6, further comprising protective covers (13) designed to protect the guide means.

8. The line (1) according to one of Claims 1 to 6, in which the first operation and/or the second operation consist of a surface treatment.

9. A method for application of a surface treatment on a motor vehicle body (2) including the following steps, consisting of:
a) positioning a vehicle body (2) on a support device (7) of a line (1) according to one of Claims 1 to 7;
b) positioning the support device (7) on a line (1) according to one of Claims 1 to 7 such that it cooperates with the guide means;
c) carrying out at least a first surface treatment operation on the underside (8) of the body (2) by means of a first operator (5) or a first robot positioned in the pit (3);
d) moving the support device (7) within the line (1).
